# EUROPEAN PATENT SPECIFICATION

(11) **EP 4 169 222 B1**
(45) Date of publication and mention of the grant of the patent: **01.10.2025**
(21) Application number: 21728082.5
(22) Date of filing: 28.05.2021
(51) Int. Cl.: H04L 9/40

(54) **GATEWAY SERVER AND METHOD, AND DNS SERVER**
GATEWAY-SERVER UND VERFAHREN SOWIE DNS-SERVER
SERVEUR ET PROCÉDÉ DE PASSERELLE, ET SERVEUR DNS

(30) Priority: 23.06.2020 GB 202009570
(43) Date of publication of application: 26.04.2023
(73) Proprietor: Tyntec Group Limited, London EC2R 7HJ (GB)
(72) Inventor: TRAPP, Thorsten, 58095 Hagen (DE); WOLFRAM, Nicola, 81545 Munich (DE); COPSEY, David Jonathan, Poole Dorset BH16 6FA (GB)
(74) Representative: Dennemeyer & Associates S.A.
(86) International application number: PCT/EP2021/064370
(87) International publication number: WO 2021/259589

(56) References cited:
- EP-A2- 1 035 702
- US-A1- 2002 163 920
- US-A1- 2009 157 887
- US-A1- 2018 019 909

## Description

The present disclosure relates to gateway server, method for operating the gateway server, and a DNS server.

Recently, the use of cloud computing services and related services has been growing considerably. Cloud computing can be thought of as providing distributed computing where computer system resources such as data storage and computing/processing resources (typically referred to as the cloud) may be available on demand over the internet rather than locally on a computing device. More and more services are only available using cloud computing. Additionally, there is increasing tendency for data to be stored in the cloud, such as in data centres accessible via the internet, rather than locally.

There is also an increasing tendency that a mobile device, such as a smart phone, may be used to manage access to services and data in the cloud. Therefore, there is an ongoing demand for higher security of cloud data and services.

In general, the more information/items that can be checked during a security verification process to verify identity (e.g. of a user), the more secure the verification process can be. However, ease of access and ubiquity of solutions is also important.

For example, the security of an identity authentication system or process may be increased my using mechanisms or parameters from one or more of the following categories:
- Something a user knows (e.g. username, password or Personal Identification Number (PIN));
- Something a user has (e.g. Subscriber Identifier Module (SIM) card and mobile device); and
- Something about a user (e.g. location, behavioural profile or biometric parameter such as fingerprint or facial identifiers).

When a user accesses the internet using their mobile device, they will typically have already performed some form of two-factor authentication (2FA), e.g. using their PIN of the SIM card of the device, and some form of verification to unlock their mobile device, such as inputting a specific mobile device PIN, fingerprint identification using a fingerprint sensor of the mobile device, or facial recognition identification using a built-in camera of the mobile device.

In order to provide access to a mobile network, in most cases a SIM or eSIM is given to a subscriber (user). The SIM holds a secret key pair, that is secured via PIN, which should be known only to the user. Each SIM has a unique identifier, called International Mobile Subscriber Identity (IMSI), specified by ITU-T E.212. A mobile network operator typically assigns phone numbers to the customer data via an IMSI. A phone number is also a unique identifier, called a mobile subscriber integrated services digital network (MSISDN) number, which is specified by ITU-T E.164. The mobile network operator typically knows subscriber information about subscriber (user) details, such as personal data relating to the subscriber's name, address, and subscription, which is normally stored on a subsystem called operations support system (OSS)/business support system (BSS).

The mobile network includes a Control Plane and User Plane segments. In general, the control plane utilizes metadata and handles the management of the network, whereas the User Plane handles actions, such as sending and receiving IP packets. If an IP packet leaves the mobile domain, it is sent out via a Network Address Translation (NAT) gateway, which provides access to the public internet and secures the subscriber in a similar manner to a Wireless Fidelity (Wi-Fi) router. Besides a gateway IP address, from the user (subscriber) perspective, the experience between surfing the internet with their phone or from their home Wi-Fi network is ubiquitous.

To access the internet, a user (subscriber) may use a mobile device, such as a mobile phone, smart phone, tablet device, and the like. As mentioned above, access to the mobile device is typically secured. Other devices such as a modem, or Internet of Things (IoT) device may also access the internet and provide similar connectivity or functionality. All (e)SIM enabled mobile devices have a unique identifier, their International Mobile Equipment Identity (IMEI) which is specified by the Global System for Mobile Communications Association (GSMA). (e)SIM enabled mobile devices also store an International Mobile Station Equipment Identity Software Version (IMEISV) number, which stores information relating to the software of the mobile device, as well as detailed information about the hardware specifications of the mobile device, and acts as a worldwide unique number for that specific UE.

In other words, a mobile service provider that provides mobile services to a user via their (e)SIM enabled mobile device, generally have a large amount of data regarding the identity of the user (e.g. name and address of the user, their billing type, their device identity (ID), etc.). This allows strong identity verification to be performed with respect to the user and their use of the mobile services offered by the mobile services provider. However, cloud services are generally available to everybody via the internet, and so securing the identity of a user using a cloud service may be more difficult and less secure.

Furthermore, although IP header enrichment may be used to provide additional information, such as user details, within an IP packet header, the enriched header data is normally in plain text and so not secure at all.

Examples of the present disclosure seek to address, or at least alleviate, the above problems.

In a first aspect, there is provided a gateway serverthat is operably connected to a network operator via a public IP network and a secure IP network, the gateway server comprising: a first communication module operable to provide communication between the gateway server and the network operator using the public IP network, the first communication module having a first IP address; and a second communication module operable to provide communication between the gateway server and the network operator using the secure IP network, the second communication module having a second IP address which has the same IP address as the first IP address; in which the gateway server is operable to: receive one or more IP packets from the network operator via at least one of the public IP network using the first communication module and the secure IP network using the second communication module, each of the one or more IP packets comprising associated header data; interpret the header data of each of the IP packets; and direct responses to the received one or more IP packets via the public IP network or via the secure IP network based on the interpreted header data so that the responses are routed via the IP network from which the corresponding respective IP packets were received.

In a second aspect there is provided a method implemented by a gateway server that is operably connected to a network operator via a public IP network and a secure IP network, in which the gateway server comprises a first communication module operable to provide communication between the gateway server and the network operator using the public IP network, the first communication module having a first IP address, and a second communication module operable to provide communication between the gateway server and the network operator using the secure IP network, the second communication module having a second IP address which has the same IP address as the first IP address; in which the method comprises: receiving one or more IP packets from the network operator via at least one of the public IP network using the first communication module and the secure IP network using the second communication module, each of the one or more IP packets comprising associated header data; interpreting the header data of each of the IP packets; and directing responses to the received one or more IP packets via the public IP network or via the secure IP network based on the interpreted header data so that the responses are routed via the IP network from which the corresponding respective IP packets were received.

Examples of the disclosure may help improve ease of use for a user. Since both the first communication module and second communication module of the gateway and call-back server have the same IP address, then there should be apparently no difference to a User Equipment (UE) device of the user that is connected to the network operator for example, and the user does not have to be concerned about whether the public IP network or secure IP network was used. Furthermore, for example, the use of a secure network may allow further authentication to be carried out (e.g. via data obtained from enriched header data) without further input from the user, while still allowing the IP packets to be directed appropriately.

In a third aspect, there is provided a Domain Name System (DNS) server in communication with an IP network that comprises a plurality of gateway IP servers each associated with a particular jurisdiction, the DNS server being operable to: receive, from a requesting device, a request for resolution of an IP address of a gateway IP server of the plurality of gateway IP servers based on a domain name provided by the requesting device; select a gateway server IP address of a gateway server selected from the plurality of gateway servers based on the geographical location of the requesting device and legal requirements associated with that geographical location; and send, to the requesting device, the gateway server IP address.

Therefore, for example, each gateway IP server may be configured to handle user data in a manner compliant with the jurisdiction of the requesting device (e.g. where the user of the device is located). Accordingly, legal requirements, such as those related to privacy of user data, may be more easily met.

Other aspects and features are defined in the appended claims.

US2002163920 discloses a method for performing network routing includes authenticating packets received via a tunnel based on security associations tied to a source agent, making routing decisions constrained by those associations, and directing authenticated packets to routing destinations such as layer 2 or layer 3 devices, based at least in part on those decisions, with optional packet decapsulation and protocol compatibility across public or private networks like IPSec.

US2009157887 disclosesa a method for communicating signaling messages between a client and a server over a network involves the client inserting into a SIP signaling message an indication specifying the interface, address, port, or protocol the server should use to send its reply, with the indication optionally including reserved words defining behaviors such as using the same interface, random selection, or semantic criteria; the server then uses this information to determine how to route its response accordingly.

EP1035702 discloses a method for secure data communication with a mobile machine involves establishing a pool of secure addresses, receiving data packets from the machine, and maintaining a data structure mapping network addresses to secure addresses for address translation. When a secure packet is received, the system identifies or creates an association using the packet's public key, verifies the key's validity, and translates the address before forwarding the packet to higher protocol layers. Non-secure packets are passed without translation, and address associations are invalidated after a timeout if only insecure packets are received.

US2018019909 discloses a method for establishing a media communication session involves a microprocessor receiving a request to initiate a session using a region-specific proxy server, generating a second request to a media control service to identify a suitable region-specific media relay based on the proxy server address, receiving the relay address, and forwarding it to a communication device to establish the session. The method supports handling fallback proxy scenarios, load-based relay selection, IP address changes during sessions, and enhanced relay functions such as NAT traversal, transcoding, protocol conversion, and encryption adjustments.

Examples of the disclosure will now be described by way of example only with reference to the accompanying drawings, in which like references refer to like parts, and in which:
Figure 1 is schematic diagram of a cloud identity system:
Figure 2 is a flowchart of an example method for resolving an IP address and determining an IP network to use;
Figure 3 schematically illustrates an example of data flow with respect to the features of Figure 1;
Figure 4 is a flowchart of an example of a method for operating a gateway server; and
Figure 5 is a schematic illustration of a computer system for implementing methods of examples of the disclosure.

A gateway server and method are disclosed. In the following description, a number of specific details are presented in order to provide a thorough understanding of the examples of the disclosure. It will be apparent however to a person skilled in the art that these specific details need not be employed in order to practise the examples of the disclosure. Conversely, specific details known to the person skilled in the art are omitted for the purposes of clarity in presenting the examples.

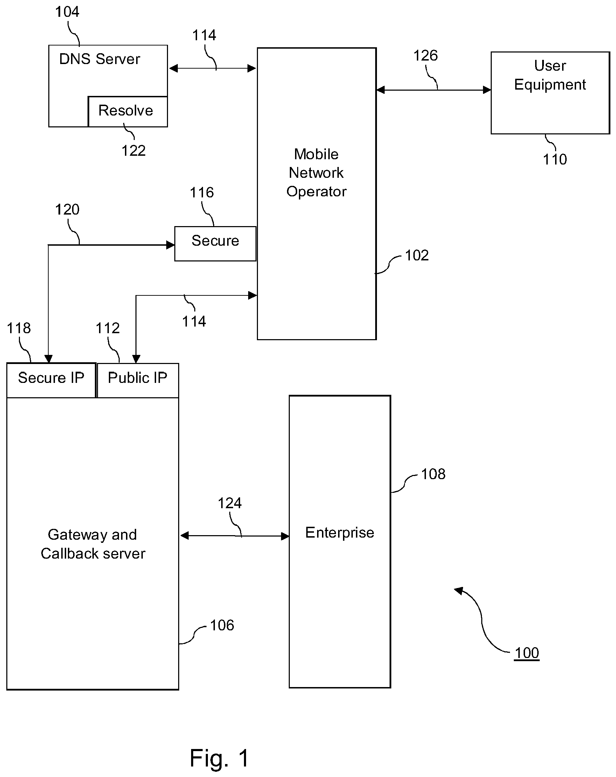

Figure 1 is a schematic diagram of a cloud identity system 100 according to examples of the disclosure. The cloud identity system comprises a mobile network operator (MNO) system 102, a Domain Name System (DNS) server 104, a gateway and call-back server 106, an enterprise service system 108, and a user equipment (UE) device 110. In examples, the gateway and call-back server 106 may act as an identity gateway server. The enterprise service system 108 may, for example, provide cloud computing services as will be described in more detail later below.

The gateway and call-back server 106 comprises a first communication module 112 operable to provide communication between the gateway and call-back server 106 and the MNO system 102 using a public internet protocol (IP) network 114, such as the internet. In examples, the first communication module 112 has a first IP address.

The MNO system 102 comprises a secure network interface 116. The gateway and call-back server 106 comprise a second communication module 118 operable to provide communication between the gateway and call-back server 106 and the MNO system 102 using a secure IP network 120. In examples, the second communication module 118 has a second IP address, which has the same IP address as the first IP address.

In examples, the secure IP network 120 is preferably an IP Exchange (IPX) network developed by the Global System for Mobile Communications (GSM) Association (GSMA). In other examples, the secure IP network 120 is a Virtual Private Network (VPN) established over a public IP network, such as the internet. In some examples, a VPN, such as Layer3 VPN, may be used in conjunction with the IPX network, to help further improve security. In other examples, the secure IP network 120 may be realised by being arranged to carry packets over a public network but with public/private keys being used for encryption and decryption of header data. In other words, more generally for example, the secure IP network 120 may utilise a VPN, for example to act as a private IP network.

The DNS server 104 is operable to communicate with the MNO system via the public IP network 114. In examples, the DNS server 104 comprises a resolve module 122, which is operable to resolve one or more IP addresses based on a domain name of a uniform resource locator (URL), for example as provide by the UE 110 via the MNO system 102. In some examples, in order to help avoid being cached by foreign DNS resolvers the TTL (time to live) for the replies is set to 0. In examples, eDNS is used to help maximise available information about the source of the request. This functionality in the context of the present disclosure will be described in more detail later below.

The gateway and call-back server 106 is operable to communicate with the enterprise service system 108 via a communication network 124. In examples, the communication network 124 is the public IP network 114, although in other examples, the communication network 124 is the secure IP network 120. However, it will be appreciated that other communication networks could be used.

The UE device 110 is operable to communicate with the MNO system 102 via a network operator communication link 126. In an example, the UE device 110 is a so-called smartphone, although it will be appreciated that the UE device 110 could be any suitable user equipment device, such as a tablet device, laptop computer, desktop computer, and the like. In examples, the network operator communication link 126 is a wireless communication link, for example to allow the UE device to communicate using a suitable wireless telecommunications standard such as 5G, 4G, LTE, 3G, 2G (GPRS/Edge) or any other suitable telecommunications standard. In some examples, the network operator is not a mobile operator and or the communication link 126 may be a wired or optical link such as that provided by an internet service provider.

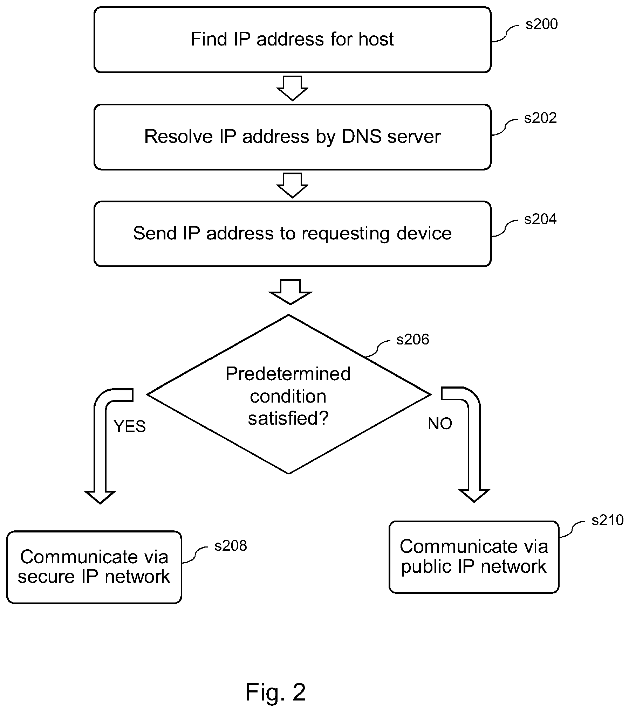

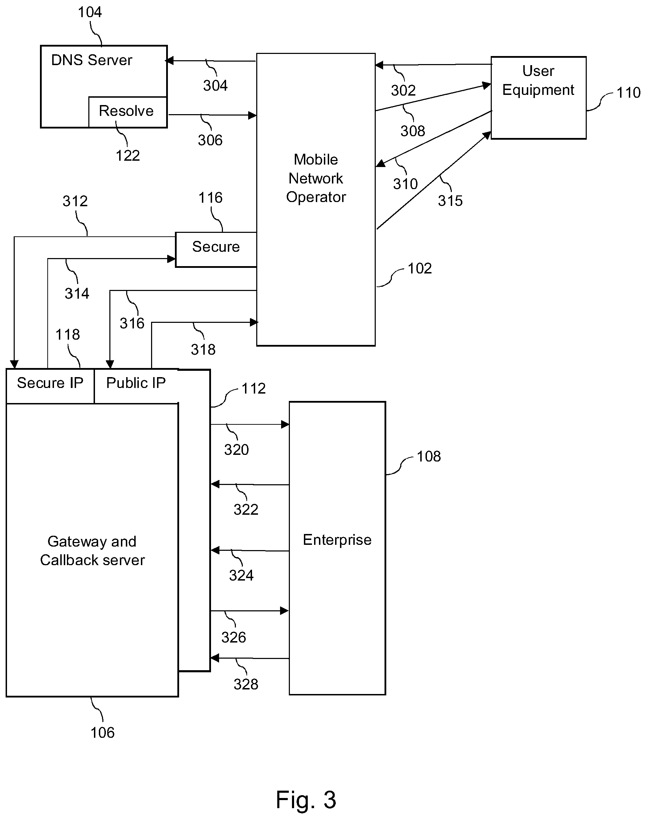

Functionality and operation of the cloud identity system 100 will now be described in more detail, with reference to Figures 2 and 3.

Figure 2 is a flowchart of an example method for resolving an IP address and determining an IP network to use, and Figure 3 schematically illustrates an example of data flow with respect to the features of Figure 1.

For example, a user may be using a web browser running on their UE, such as UE 110, to browse a customer website comprising one or more links. For example, the user may click on an authentication link in the customer site. Referring to Figure 2, at a step s200, the UE needs to find the IP address for the host associated with the link that the user clicked on. In an example, the host has an address in the form of: 0123456789.iq.tyntec.net. More generally, the host address may be of the form [10HEX].xx.yyyyyy.zzz, where [10HEX] is a 10 digit hexadecimal such as 0123456789, which is associated with an identity of a user or users such as a customer number, a company key or an account name, e.g. of the host, and xx.yyyyyy.zzz further specifies the host address. However, it will be appreciated than any other suitable host address could be used.

Therefore, at the step s200, the UE 110 sends a lookup request for [10HEX].xx.yyyyyy.zzz to the DNS server 104. For example, the UE 110 may send a lookup request for 0123456789.iq.tyntec.net to the MNO system 102 via the network operator communication link 126 as indicated by arrow 302 in Figure 3. In examples, the DNS server 104 is authoritative for the subdomain iq.tyntec.net. The MNO system 102 may then pass the lookup request onto the DNS server 104 via the public IP network 114, as indicated by the arrow 304 in Figure 3.

Then, at a step s202, the resolve module 122 of the DNS server 104 resolves the IP address associated with the lookup request. In examples, the resolved IP address is based on the IP address of a source IP, such as the IP address of the MNO system 102, or the IP address of the UE 110. In some examples, the resolved IP address is based on one or more configuration parameters, as will be described in more detail below. For example, the configuration parameters could relate to a geographical location of the source IP address.

At a step s204, the DNS server 104 sends the resolved IP address to the UE 110, which can be considered to be a requesting device. For example, the DNS server 104 sends the resolved IP address to the MNO system 102 via the public IP network 114, as indicated by arrow 306 in Figure 3. The MNO 102 system may then send the resolved IP address to the UE 110 via the network operator communication link 126 as indicated by arrow 308 in Figure 3.

At a step s206, the MNO 102 determines if a predetermined condition is satisfied. In examples, the predetermined condition is whether the operator of the MNO system 102 has a bilateral agreement with the operator of the gateway and call-back server 106. For example, this may be a commercial agreement agreed via a contract between the operator of the MNO system 102 and the operator of the gateway and call-back server 106. In some examples, the predetermined condition may be whether a subscriber (e.g. user) is on a whitelist (e.g. based on contractual arrangements) compiled by the operator of the MNO system 102 or other network such as wired and/or optical network provided by an ISP for example.

In some examples, the whitelist may be provided to an enterprise customer base of the operator of the MNO system 102, for example by the operator of the MNO system 102 selling some or all of the content of the whitelist to one or more enterprise customers. In some examples, the predetermined condition is whether the IP address of an originating packet (e.g. from the UE 110, MNO system 102 or other source) is within a set of predefined IP addresses, such as those defined by the operator of the gateway and call-back server 106 and/or of the MNO system 102. In some examples, the predetermined condition may be whether the MSISDN or IMSI of the UE 110 is within a set of predefined MSISDNs or IMSIs, such as those defined by the operator of the gateway and call-back server 106 and/or of the MNO system 102. In other examples, the predetermined condition may be whether a user's device and/or the MNO system or other source is a subscriber of a server or of a particular network. However, it will be appreciated that other predetermined conditions could be used. In some examples, an option may be offered to a user as to whether they want to opt in or opt out of satisfying the predetermined condition, for example on a per user/per authentication basis.

If the predetermined condition is satisfied, then, at a step s208, communication between the MNO system 102 and the gateway and call-back server 106 takes place via the secure IP network 120. However, if the predetermined condition is not satisfied, then, at a step s210, communication between the MNO system 102 and the gateway and call-back server 106 takes place via the public IP network 114. In some examples, the communication between the MNO system 102 and the gateway and call-back server 106 takes place via the public IP network 114 is encrypted e.g. using VPN such as Layer 3 VPN, for example as agreed bilaterally between the operator of the MNO system 102 and the operator of the gateway and call-back server 106. In other words, for example, the predetermined condition can be thought of as a criterion for deciding whether the secure IP network 120 or the public IP network 114 is used and header enrichment carried out or not.

In examples, the resolved IP address that is resolved at the step s204 based on the lookup request for 0123456789.iq.tyntec.net, corresponds to the first IP address corresponding to the first communication module 112 for communication via the public IP network 114, or the second IP address corresponding to the second communication module 118 for communication via the secure IP network 120. As mentioned above, the first IP address is the same IP address as the second IP address. For example, public routable IP addresses may be used, so that the same IP addresses may always be used even if the paths may be different, for example as determined by the predetermined condition. Therefore, even if the MNO system 102 is unable to provide functionality to determine whether the predetermined condition is satisfied or not, a request, such as an Hypertext transfer protocol (HTTP) request coming from the UE 110, may still be correctly routed to the gateway and call-back server 106. In examples, if the secure IP network 120 is a VPN, then the first IP address and the second IP address can be the same as the IP address of the enterprise service system 108.

For example, referring to Figure 3, once the IP address is resolved, the UE 110 may send an HTTP request to the resolved IP address. In examples, the http request is of the following form: http://[10HEX].xx.yyyyyy.zzz/[10HEX]/[10HEX-SESSION-ID]/OPT where [10HEX] is defined as above, [10HEX-SESSION-ID] is a session ID relating to the HTTP request and OPT is one or more optional parameters. For example, the HTTP request could be http://1234567890.iq.tyntec.net/1234567890/1234567890 (SESSION-ID). However, it will be appreciated that any other suitable HTTP request could be used. In examples, the optional parameters may be set by an application programming interface (API) enterprise, e.g. associated with the requested URL. For example, the OPT parameters may be used to provide additional functionality provided by the API, such as an OK button, or relate to a predefined webpage. In other words, for example, the browser on the UE 110 may instigate sending of the HTTP request via the MNO system 102, requesting the URL at the resolved IP address, and the OPT parameters may be used to define how to respond to a generic request, e.g. to help increase flexibility of the system.

For example, the UE 110 may send the HTTP request to the MNO system 102 as indicated by the arrow 310. In examples, if the predetermined condition is met, header enrichment is carried out to include enriched header data in a header of an IP packet of the HTTP request. For example, the enriched header data may include data relating to one or more of E.164, E.212, IMEISV, APN, FQDN, path, Account type, Cell-ID/network location, Name, and Address, although it will be appreciated that any suitable data could be used. In examples, the MNO system 102 and/or the Gateway and call-back server 106 may perform the header enrichment. As mentioned above, in some examples, the network operator communication link 126 may be a wired or optical link such as that provided by an internet service provider. In these examples, the internet service provider may enrich the header data with e.g. information relating to the name and address of an endpoint (e.g. of a user operating a user device connected to the network operator communication link 126 via a wired or optical link for example). For example, data relating to a connection owner (e.g. ISP) may be used for header enrichment and authentication based on the data relating to the connection owner. However, it will be appreciated that other suitable information could be used for the enriched header data.

The use of header enrichment in the context of the present disclosure will be described later below. Additionally, as mentioned above, if the predetermined condition is met, then the HTTP request is sent to the gateway and call-back server 106 via the secure IP network 120, for example as indicated by the arrow 312 in Figure 3.

As mentioned above, in some examples, the secure IP network 120 may be realised by being arranged to carry packets over a public network but with public/private keys being used for encryption and decryption of header data. For example, an encrypted header may be decrypted, enriched header data attached/included into the packet, and then the header encrypted again. However, this may be computationally more complex and more complicated to process for a network.

The gateway and call-back server 106 is operable to perform header normalisation on the received HTTP request, for example relating to the identity [10HEX], and the gateway and call-back server 106 is operable to store the normalised header data. The gateway and call-back server 106 is also operable to store temporarily the session ID of the HTTP request, [10HEX-SESSION-ID]. In examples, the header data is associated with the respective identity [10HEX] so that it corresponds with a particular customer, for example. More generally, in examples, the gateway and call-back server 106 is operable to normalise the header data, and store the normalised header data together with session ID data associated with an IP packet of the one or more IP packets, for example to use for authentication with an API of the enterprise service system 108 , as will be described in more detail later below.

In examples, the HTTP request is terminated by the gateway and call-back server 106, and the gateway and call-back server 106 replies to the HTTP request with a configurable answer (also referred to herein as "response") which is sent to the UE device 110. In examples, the response to the HTTP request is "204 (no content)" by default, although it will be appreciated that other response could be used, depending on the desired configuration. For example, if the HTTP request was received at the gateway and call-back server 106 via the secure IP network 120, then the reply is also sent via the secure IP network 120, for example as indicated by the arrow 314 in Figure 3 to the MNO system 102. The response is then sent from the MNO system 102 to the UE device 110, for example as indicated by the arrow 315 in Figure 3.

If, however, the predetermined condition is not satisfied, then the HTTP request received at the MNO system 102 from the UE device 110 is forwarded to the gateway and call-back server 106 via the public IP network 114, as indicated by the arrow 316 in Figure 3. In examples, the gateway and call-back server 106 is operable to perform header normalisation on the received HTTP request, for example relating to the identity [10HEX], and the gateway and call-back server 106 is operable to store the normalised header data, in the same way as if the HTTP request had been received via the secure IP network 120. In examples, if the HTTP request was received at the gateway and call-back server 106 via the public IP network 114, then the gateway and call-back server 106 is also operable to store temporarily the session ID of the HTTP request, [10HEX-SESSION-ID], in the same manner as when the HTTP request is received via the secure IP network 120. Then, in examples, the HTTP response is sent by the gateway and call-back server 106 via the public IP network 114, as indicated by the arrow 318 in Figure 3, instead of via the secure IP network 120, which is then sent onto the UE device 110 by the MNO system 102 as indicated by the arrow 315.

An example of enriched header data is given below which shows an example of an interpreted HTTP packet, although it will of course be appreciated that many other arrangements and data for inclusion in the header data for header enrichment are contemplated. In the below, header data added by the MNO 102 is indicated with the prefix "x-" e.g. corresponding to enriched header data.
*CLIENT VALUES: client*_*address=10.244.5.77*
*command=GET*
*real path=*/*demo*
*query=nil*
*request_version=1.1*
*request_uri=http:*//
*voyager-production.tech-on-air.com:8080*/*demo*
*SERVER VALUES:*
   *server_version=nginx: 1.10.0 - lua: 10001*
   *HEADERS RECEIVED:*
      *accept=text*/*html,application*/*xhtml+xml,application*/*xml;q=0.9,image*/*webp,image*/*apng,**
      /**;q=0.8,application*/*signed-*
      *exchange;v=b3;q=0.9*
      *accept-encoding=gzip, deflate*
      *accept-language=de-DE,de;q=0.9,en-US;q=O.8,en;q=0.7*
      *billing-type=0800*
      *cache-control=max-age=0*
      *connection=close*
      *host=voyager-production.tech-on-air.com*
      *http-rule-id=451*
      *http-rule-name=HEADER_ENRICHMENT*
      *http-rulebase-id=801*
      *http-rulebase-name=HEADER_ENRICHMENT*
      *null=*
      *ipgrade-insecure-requests=1*
      *user-agent=Mozilla*/*5.0 (Linux; Android 4.4.2; GT-19195) AppleWebKit*/*537.36*
      *(KHTML, like Gecko) Chrome*/*79.0.3945.136*
      *Mobile Safari*/*537.36*
      *x-apn=demo-static.com*
      *x-auth-acg=801*
      *x-cid=2311140257*
      *x-consumer-ip=125.19.25.36*
      *x-correlation-id=166595437-5-*
      *1581094908.606*
      *x-forwarded-for=10.244.8.0*
      *x-forwarded-host=voyager-production.tech - on-air.com*
      *x-forwarded-port=80*
      *x-forwarded-proto=http*
      *x-ggsn=125.19.25.59*
      *x-imeisv=3548990647184476*
      *x-imsi=234030137845351*
      *x-ipv4=10.234.116.3*
      *x-location-info=SAI=62F22014BGA4DE*
      *x-md5-*
      *imsi=4087AEA10CF98FBB12E6A390E94C3A63*
      *x-md5-*
      *msisdn=0FDE38E97OD79A*C328541*CF264DSC398*
      *x-md5-msisdn-without*
      *cc=415BD4EA17CEBFOBE88E62F211283F92*
      *x-msisdn=447829781021*
      *x-msisdn-without-cc=7829781021*
      *x-original-uri=*/*demo*
      *x-plmnid=26202*
      *x-rat=GTP*_*RAT*_*TYPE*_*UTRAN*
      *x-roaming=ROAMING*
      *x-scheme=http*
      *X-sgsn=139.7.142.34*
      *BODY:*
      *-no body in request-*

To help make sure that the HTTP is directed via the appropriate IP network, in some examples, the gateway and call-back server 106 is operable to add ingress data to the header data. In examples, the ingress data indicates whether the respective IP packet arrived at the first communication module 112 from the public IP network 114 or at the second communication module 118 from the secure IP network 120. In examples, the gateway and call-back server 106 is operable to direct the responses based on the ingress data. In some examples, the ingress data comprises IP tag data.

Since both the first communication module 112 and second communication module 118 of the gateway and call-back server 106 have the same IP address, then there should be apparently no difference to the UE device 110 of the user, and the user does not have to be concerned about whether the public IP network 114 or secure IP network 120 was used.

In other words, more generally in examples, the gateway and call-back server 106 is operable to receive one or more IP packets from the network operator (such as the MNO system 102) via at least one of the public IP network 114 using the first communication module 112 and the secure IP network 120 using the second communication module 118. Each of the one or more IP packets comprises associated header data. For example, the gateway and call-back server 106 may be operable to interpret the header data of each of the IP packets, for example to determine where it came from. Furthermore, in examples, the gateway and call-back server 106 is operable to direct responses to the received one or more IP packets via the public IP network 114 or via the secure IP network 120 based on the interpreted header data so that the responses are routed via the IP network from which the corresponding respective IP packets were received.

In order to help implement a cloud service, for example provided by the enterprise service system 108, the gateway and call-back server 106 is operable to act as a call-back server and communicate with the enterprise service system 108 . For example, the user of the UE device 110 may be interacting with a cloud service provided by the enterprise service system 108 using their UE device 110. As mentioned above, the gateway and call-back server 106 is operable to store normalised headers (including the enriched header data if added) and a session ID. In examples, the session ID is associated with the particular UE (e.g. UE device 110), that made the HTTP request. In examples, the session ID includes the network identity data, indicative of whether the HTTP request received at the gateway and call-back server 106 from the UE device 110 was received from the MNO system 102 via the public IP network 114 to the secure IP network 120. In examples, the session-ID includes the ingress data mentioned above.

During interaction of the UE device 110 with an API of the enterprise service system 108, the gateway and call-back server 106 is operable to send an encrypted IP protocol call, such as an HTTPS call, to the API of the enterprise service system 108 , as indicated by the arrow 320 in Figure 3. In examples, the HTTPS call is of the form: https://enterprise.url/[10HEX]/[10HEX-SESSION-ID]/[JSON-DATA] where enterprise.url is the URL of the cloud enterprise service, and JSON-DATA is JavaScript Object Notation data. However, it will be appreciated that instead of JSON being used, other data formats could be used. In examples, the JSON-DATA comprises data such as that relating to one or more of the IP address of the gateway and call-back server 106, the enriched header data sent as mentioned above according to the one or more of the arrows 310, 312, and 316, and configuration data for the API, although it will be appreciated that other suitable data could be used.

Since the header data may comprise personal data of the user and/or the UE device 110, in examples, the enterprise service system 108 is operable to respond to the encrypted IP protocol (e.g. the HTTPS call sent at the arrow 320) with a call-back response indicated by the arrow 322, which is preferably also according to an encrypted IP protocol such as HTTPS.

For example, the enterprise service system 108 may send a call-back response, responding with "200" indicating that the gateway and call-back server 106 should start a timer, which, after expiry of a predetermined amount of time, causes the gateway and call-back server 106 to delete the header data and the session ID data associated with the identity [10HEX]. In other words, in examples, the gateway and call-back server 106 is operable to start a timer upon receipt of a call-back response from the enterprise service system 108 , and delete the header data and session ID data when timer data of the timer indicates that greater than a deletion threshold amount of time has passed. The timer can thus be thought of as a timeout timer, for example.

Alternatively, in examples, the enterprise service system 108 may send a call-back response, responding with "205" indicating that the gateway and call-back server 106 should delete the header data and the session ID data associated with the identity [10HEX] on receipt of the call back response from the enterprise service system 108 at the gateway and call-back server 106. In other words, in examples, the gateway and call-back server 106 is operable to delete the header data and the session ID data on receipt of a call-back response from the enterprise service system 108 .

For example, assuming that the timer data of the time is less than the deletion threshold amount of time, the enterprise service system 108 may identify the UE device 110 using the session ID data. For example, the enterprise service system 108 may use the session ID data to identify a customer and automatically log them into their customer account in a cloud service provided by the enterprise service system 108. In some examples, further authentication may be required, e.g. via multi-factor authentication via the UE device 110. This may, for example, occur if the user is accessing the enterprise service system 108 via for example, a Wi-Fi connection (and hence the MNO system 102 is not involved with the communication with the enterprise service system 108) or where the public IP network 114 was used because the MNO system 102 is not a partner with the gateway and call-back server 106 and/or enterprise service system 108 . In other words, for example, if the session ID data indicates that the public IP network 114 was used, then a multi-factor authentication API may be implemented.

However, if the header data indicates that the secure IP network 120 was used, then a user may be automatically logged into their account of the cloud service, because it is assumed that the user already authenticated themselves when accessing their UE device 110 and subsequent communication between the MNO system 102 and gateway and call-back server 106 was carried out via the secure IP network 120, which is also assumed to be secure.

If, for example, further authentication is needed by the enterprise service system 108 , for example to confirm a purchase that the user is making, then the enterprise service system 108 may send a further authentication request to the gateway and call-back server 106, as indicated by arrow 324 in Figure 3. For example, this may be of the form:
https://[10HEX].xx.yyyyyy.zzz/[10HEX-SESSION-ID]/FINGERPRINT{parameters}(action=match/provide)

In response to receiving the authentication request corresponding to the arrow 324, the gateway and call-back server 106 is operable to transmit a an HTTPS call-back response to the enterprise service system 108 (shown by arrow 326 in Figure 3) with results of the request, or for example indicating an error occurred. For example, authentication may be carried out based on the enriched header data stored by the gateway and call-back server 106 that is associated with the respective session ID. This may, for example, allow authentication to be carried out on the basis of one or more of: 2FA, 3FA, multi FA, fingerprint recognition (e.g. as carried out when the user accessed the UE device 110), device ID of the UE device 110, SIM of the UE device 110, phone number of the UE device 110, location of the UE device 110, personal data of a user of the UE device 110, and the like.

For example, to perform further authentication, the enterprise service system 108 is operable to transmit, as part of the authentication request sent according to the arrow 324 to the gateway and call-back server 106, checking parameters selected from those corresponding to fields of the JSON-DATA received from the gateway and call-back server 106 via arrow 320.

For example, the checking parameters may be selected from one or more of: device ID of the UE device 110, (e)SIM of the UE device 110, phone number of the UE device 110, location of the UE device 110, personal data of a user of the UE device 110, although it will be appreciated that other data could be used. In some examples, the checking parameters may include a fingerprint ID which is a combination of two or more the other checking parameters (e.g. data items selected from those corresponding to fields of the JSON-DATA)

For example, the fingerprint ID could comprise the IMSI, IMEI and phone number of the UE 110. In some examples, the fingerprint ID comprises a fingerprint ID hash value which is generated by performing a hash function on one or more checking parameters. For example, the IMSI, IMEI, and phone number of the UE 110, may be used to generate the fingerprint ID hash value, although it will be appreciated that other parameters could be used. Preferably, IMEISV data is not used to generate the hash value, otherwise a software update would change the hash value and so prevent effective authentication.

For example, the enterprise service system 108 may generate the fingerprint ID hash value hash value, although it will be appreciated that other resources could be used to generate the hash value. For example, during authentication, the gateway and call-back server 106 may generate a authentication hash value from the corresponding fields of the enriched header data for comparison with the fingerprint ID hash value so as to determine whether there is a match between the authentication hash value and the fingerprint ID hash value. In other words, for example, an authentication operation may comprise comparison of the fingerprint ID hash value generated from two or more of the checking parameters received from the enterprise service system with an authentication hash value generated by the gateway server from the enriched header data.

The use of a fingerprint ID comprising a hash value helps keep data relating to the user secret and/or secure, because the hash value may be used to perform authentication (e.g. match between expected data and provided data) without using the user data in plain text.

Additionally, for example, the checking parameters that may be used for authentication may be configured according to the desired use e.g. by enterprise account, or on a case by case basis depending on the API. In other words, for example, the checking parameters may be selected according to an agreement between an operator of the gateway server 106 and an operator of the enterprise service system 108.

In examples, the further authentication may be performed as one or more API calls from the enterprise service system 108 to the gateway and call-back server 106 having the session ID and call-back URL received in an initial API call corresponding to the arrow 320 from the gateway and call-back server 106. The gateway and call-back server 106 is operable to compare the checking parameters with the normalised enriched header data to determine a degree to which the checking parameters match with relevant fields of the enriched header data. In examples, the gateway and call-back server 106 is operable to generate a matching score, e.g. indicating a percentage to which the relevant fields match (for example 0% = no match, 100% = complete match), and send this to the enterprise service system 108 as indicated by the arrow 326. Based on the matching score, the enterprise service system 108 may then determine whether an authorisation criterion is satisfied.

For example, the authorisation criterion may be considered to be satisfied if the matching score is greater than or equal to a matching threshold. In examples, the matching threshold is one of 80%, 85%, 90%, 92%, 94%, 95%, 96%, 97%, 98%, 99%, 99.5%, and 100%, although it will be appreciated that any other suitable matching threshold could be used, depending on the desired level of security, and/or a rate of false positives, for example.

In some examples, the enriched header data may be cross-referenced with other data such as geographical data as part of the authentication process. For example, the enriched header data may comprise cell identification data indicating the geographical cell within which the UE 110 is located. For example, a user may wish to pay for an item in a store using a payment app on their UE 110. The store may belong to a plurality of stores having the same store name (e.g. a chain of stores) but having several different locations. In this example, the checking parameters include the name of the store at which the user is making their purchase. During the authentication process, the known locations of the stores may be compared with the cell identification data using e.g. a third party mapping service to determine if there are any stores of that name within the cell. If, for example, there is only one store with that store name within the geographical cell then there is a high probability that the user is located at that store, and this information can be used to help authenticate the payment.

In other words, for example, the gateway and call-back server 106 may match the geographical location of the UE 110 with a store geographical location selected from a list of possible geographical locations of one or more possible stores based on a comparison between the cell identification data and mapping data relating to the one or more possible stores (e.g. indicating a location/address of the one or more possible stores).

In some examples, the gateway and call-back server 106 is operable to determine a location probability that the UE 110 is located at a particular store based on the comparison. In examples, the UE 110 is determined to be located at a particular store if the location probability for that store is greater than or equal to a location probability threshold. If, for example, the UE 110 is determined to be located at the store at which the payment is being made, then the payment may be automatically authorised/authenticated. Therefore, for example, even if an exact location of the UE 110 is not known e.g. because GPS data is not included in the enriched header data, the location of the UE 110 may still be used for authentication e.g. to authorise an action, such as payment for an item at a store.

More generally, for example, the enriched header data may be cross-referenced with one or more data items obtained from sources other than the enriched header data and the checking parameters to generate cross-referenced data. In examples, authentication, such as authorising an action, is based on comparison between the cross-referenced data and the checking parameters. In the example mentioned above, the cell identification data found in the enriched header data may be compared with third-party mapping data to generate the cross-referenced data, and this cross-referenced data compared with store location data provided in the checking parameters by the enterprise service system 108. However, other arrangements are also possible, such as comparison of the enriched header data with other non-enriched header data such as customer data held by the operator of the enterprise service system 108.

As mentioned above, one or more IP packets that are communicated via the secure IP network 120 comprise enriched header data. In other words, more generally, in examples the gateway and call-back server 106 is operable to perform an authentication operation based on a comparison between the enriched header data and checking parameters received from the enterprise service system 108 via a secure request (such as an HTTPS request), for example as described above with respect to the matching threshold, although it will be appreciated that other authentication operations could be performed.

In examples, execution of the authentication operation is triggered in response to reception of an authentication request from an external source. For example, a URL may be used to cause the authentication request to be sent to the gateway and call-back server 106. For example, a URL of the enterprise service system 108 to trigger the execution of the authentication operation may be provided by the enterprise service system 108 acting as the external source and sent to the UE 110 (e.g. actively pushed). For example, the URL may be in a website or an authentication link for example as indicated with a button/image and/or icon that is actively pushed to the UE 110.

In some examples, the URL may be sent via the public IP network 114 or the secure IP network 120. In other examples, the authentication request may be sent to the UE 110 via IP push, a messaging service such as an Over the Top (OTT) messaging service (e.g. WhatsApp, or Viber) or other messaging service such as Rich Communication Services (RCS) messaging or Short Messaging Service (SMS) messaging. However, it will be appreciated that any suitable technique for conveying an authentication request may be used. Therefore, for example, a user may be authenticated actively rather than passively.

Once further authentication has been carried out and any associated operations performed, such as authorisation of payment, then the enterprise service system 108 may send a session delete HTTPS call to gateway and call-back server 106 (indicated by arrow 328 in Figure 3) to cause the gateway and call-back server 106 to delete the session associated with the session ID and also to delete the corresponding stored header data. For example, the gateway and call-back server 106 may delete the header data and the session ID data on receipt of a call-back response from the enterprise service system 108, in a similar manner to that carried out in response to the call-back response associated with the arrow 322.

Although in Figures 1 and 3, the cloud identity system 100 comprises the gateway and call-back server gateway and call-back server 106, it will be appreciated that more than one gateway and call-back server could be used. For example, a plurality of gateway and call-back servers could be used, each having the same or similar functionality to the gateway and call-back server 106 described herein. Additionally, in some example, the function of acting as a gateway as described herein may be implemented on a gateway server separate from a call-back server, which implements the call-back functionality described herein. More generally, in examples, processing indicated by the arrows 320, 322, 324, 326, and 328 and described above may be thought of as implementing call-back functionality.

In examples, each gateway and call-back server is located within and/or associated with a particular jurisdiction, such as a respective country or group of countries (e.g. the countries of the European Union (EU). Each gateway and call-back server has an associated IP address which is the same for its first communication module and its second communication module. An example of a configuration of IP addresses with respect to different jurisdictions is shown in Table 1.

**Table 1**

| Gateway server IP address | DNS | Jurisdiction |
|---|---|---|
| IP 1 | c1.iq.tyntec.net | European Union (EU) |
| IP 2 | c2.iq.tyntec.net | EU |
| IP 3 | c3.iq.tyntec.net | EU |
| IP 4 | c4.iq.tyntec.net | United States of America (USA) |
| IP 5 | c5.iq.tyntec.net | Australia |
| IP 6 | c6.iq.tyntec.net | China |

More generally, for example, each respective DNS may be of the form c[N].xx.yyyyyy.zzz, where N is a number from 0 to 9, although it will be appreciated that any other suitable mapping convention could be used, e.g. depending on the number of jurisdictions. For example, such a configuration may assist with compliance with different legal regulations in different jurisdictions, such as data protection laws. As such, one or more gateway and call-back server 106 may be provided per jurisdiction with appropriate configurations, e.g. relating to the storage of the enriched header data, which may comprise personal information relating to a user.

In examples, the DNS server 104 is operable to determine which gateway server IP address to use based on the geographical location of the device from which the lookup request originated. In some examples, the determination of the gateway server IP address is based on legal requirements associated with the geographical location of the device. For example, a legal requirement may be whether the General Data Protection Regulation in the EU (GDPR) needs to be complied with.

For example, the DNS server 104 may determine that a particular gateway server IP address based on the geographical location of the requesting device and legal requirements associated with that geographical location should be returned during the step s200 where the UE 110 sends a lookup request to the DNS server 104. If, for example, the UE 110 is geographically located in Germany, then GDPR should be complied with, and so the DNS server 104 would return an appropriate gateway server IP address for a gateway server located in the required jurisdiction. Referring to Table 1, for a UE 110 located within the EU, such as in Germany, the DNS server 104 may return a gateway server IP address such as IP 1, IP 2, or IP 3.

In other words, more generally for example, the DNS server 104 may be in communication with an IP network (such as the public IP network 114). In this example, the public IP network comprises a plurality of gateway IP servers (such as a plurality of gateway and call-back servers as described herein). Each gateway IP server may be associated with a particular jurisdiction. For example, one or more gateway IP servers may be located within a particular geographical location within a particular country.

As referred to herein, "jurisdiction" may be taken to mean a particular country and/or group of countries, that for example comply with, or have agreed to comply with, a legal framework (e.g. having a common sets of laws) for that jurisdiction.

In examples, the DNS server 104 may receive, from a requesting device (such as UE 110), a request for resolution of an IP address of a gateway IP server of the plurality of gateway IP servers based on a domain name provided by the requesting device. The DNS server 104 may select a gateway server IP address of a gateway server selected from the plurality of gateway servers based on the geographical location of the requesting device and legal requirements associated with that geographical location, and send, to the requesting device, the gateway server IP address.

Therefore, for example, each gateway IP server such as the gateway and call-back server 106 may be configured to handle user data in a manner compliant with the jurisdiction of the requesting device (e.g. where the user of the device is located). Accordingly, legal requirements, such as those related to privacy of user data, may be more easily met.

Additionally, it will be appreciated that although only one DNS server 104 may be provided, e.g. to act as a central DNS server, more than one DNS server could be used, e.g. located in respective jurisdictions. The functionality of the DNS server 104 may also be implemented by one or more gateway and call-back servers, for example depending on desired functionality and/or jurisdictional limitations.

In examples, what data is included in the enriched header data depends on a configuration associated with a particular customer or cloud service. In examples, customer configuration data may be of the form shown in Table 2, where 10HEX is as defined above, and {CONFIG} comprises configuration data.

**Table 2**

| | |
|---|---|
| Corporate Name 1 | 10HEX{CONFIG} |
| | 10HEX{CONFIG} |
| | 10HEX{CONFIG} |
| Corporate Name 2 | 10HEX{CONFIG} |

For example, as indicated in Table 2, a corporate name may have more than one associated configuration, where each configuration is associated with a respective identity [10HEX].

In examples, the configuration data {CONFIG} comprises one or more of: data relating to which parameters are allowed to be included in the enriched header data, e.g. according to any agreements with the operator of the MNO system 102; URL data relating to a session call-back URL; a timeout value (e.g. relating to the deletion threshold amount of time mentioned above); API authentication data (e.g. to authenticate use of an API on the enterprise service system 108 ); and fingerprint data (e.g. relating to whether fingerprint authorisation is allowed). In an example, the configuration data is of the form:

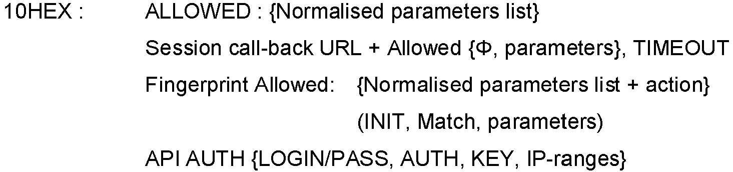

However, it will be appreciated that other suitable forms of configuration data could be used. In the example of the configuration data above, INIT comprises specific and predefined parameters (e.g. defined by a customer agreement), for example to allow parameters in clear text relating to a new user to be provided to the enterprise service system 108 from the MNO system 102 via the gateway and call-back server 106. For example, these may be defined by the terms and conditions of the cloud service operated by the enterprise service system 108 .

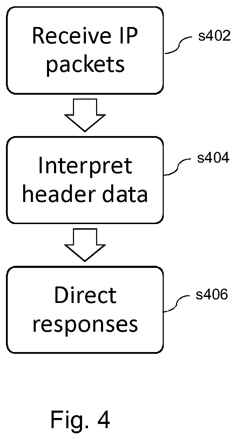

Figure 4 is a flowchart of an example of a method for operating a gateway server, such as the gateway and callback server 106, according to examples of the disclosure.

At a step s402, the gateway and callback server 106 receives one or more IP packets from the MNO system 102 via at least one of the public IP network 114 using the first communication module 112 and the secure IP network 120 using the second communication module 118. In examples, as mentioned above, each of the one or more IP packets comprises associated header data.

At a step s404, the gateway and call-back server 106 interprets the header data of each of the IP packets. For example, the gateway and call-back server 106 may read the header data to determine whether it arrives via the public IP network 114 or the secure IP network 120. Alternatively, or in addition, this may be determined based on whether the first communication module 112 or the second communication module 118 was used to receive the respective IP packet. In examples, interpreting the header data may include reading the header data, and normalising it so that predetermined data fields are stored in a memory of the gateway and call-back server 106. In examples, interpreting the header data may include determining if the header data comprises enriched header data, such as that described above.

At a step s406, the gateway and callback server 106 directs responses to the received one or more IP packets via the public IP network 114 or via the secure IP network 120 based on the interpreted header data so that the responses are routed via the IP network from which the corresponding respective IP packets were received.

The examples of the gateway and call-back server 106 and interaction with the UE device 110, DNS server 104, MNO system 102, and enterprise service system 108 described herein may help improve the security of cloud services that integrate APIs. For example, login/password procedures may be replaced with authentication based on the enriched header data, e.g. as described herein with respect to the call-back functionality. Additionally, for example, a current location could be matched with a point of sale (POS) location e.g. based on the enriched header data, without using a further application, Wi-Fi location, or depending upon use of GPS (Global Positioning System). For example, the location could be matched to point of sale using cell identification data as described above.

The techniques described herein may be implemented by mobile or network operators without having to install additional or dedicated / specialist equipment, because the authentication may be based on the enriched header data. However, because the enriched header data is secured, either by sending it via the secure IP network 120 or related data is sent via HTTPS (e.g. as described with respect to arrows 320, 322, 324, 326, 328 of Figure 3), then this helps prevent the information associated with the enriched header data from being carried through a public IP network such as the internet in an unencrypted way. Additionally, the authentication techniques described herein may be used by themselves, or in addition to other authentication techniques such as SMS 2FA, and may thus replace current security techniques with a simpler system, or help provide further security.

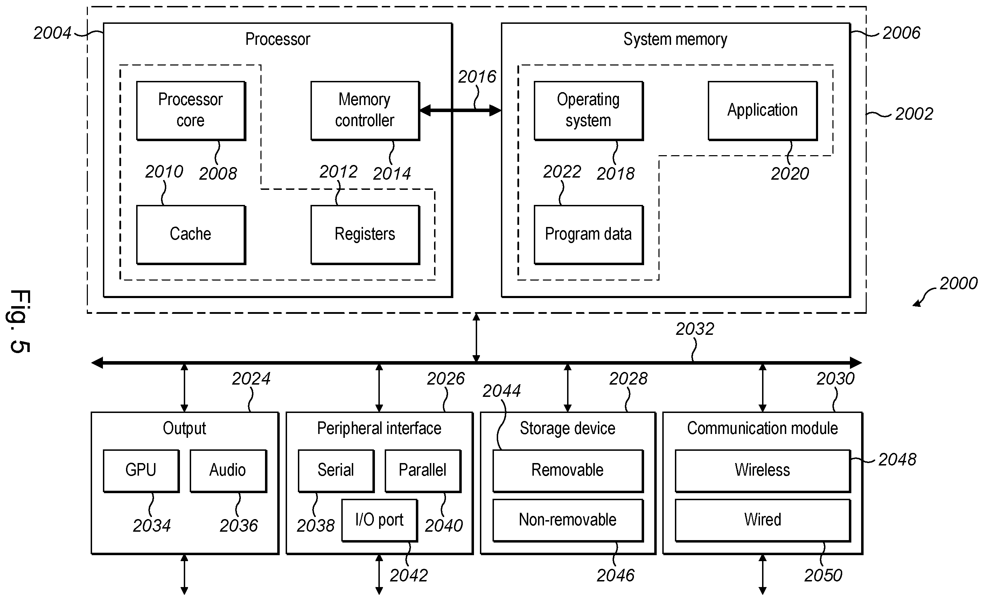

Figure 5 schematically shows a computer system for implementing methods of examples of the disclosure. In particular, Figure 5 shows an example of a computing device 2000 for example which may be arranged to implement one or more of the examples of the methods described herein. In examples, the computing device 2000 comprises main unit 2002. The main unit 2002 may comprise a processor 2004 and a system memory 2006. In examples, the processor 2004 may comprise a processor core 2008, a cache 2010, and one or more registers 2012. In examples, the processor core 2008 may comprise one or more processing cores and may comprise a plurality of cores which may run a plurality of threads. The processor 2004 may be of any suitable type such as microcontroller, microprocessor, digital signal processor or a combination of these, although it will be appreciated that other types of processor may be used.

In examples, the processor core 2008 may comprise one or more processing units. In examples, the processor core 2008 comprises one or more of a floating point unit, an arithmetic unit, a digital signal processing unit, or a combination of these and/or plurality of other processing units, although it will be appreciated that other processing units could be used. In examples, the cache 2010 may comprise a plurality of caches such as a level one cache and a level two cache, although other appropriate cache arrangements could be used.

In examples, the processor 2004 comprises a memory controller 2014 operable to allow communication between the processor 2004 and the system memory 2006 via a memory bus 2016. The memory controller 2014 may be implemented as an integral part of the processor 2004, or it may be implemented as separate component.

In examples, the system memory 2006 may be of any suitable type such as non-volatile memory (e.g. flash memory or read only memory), volatile memory (such as random access memory (RAM)), and/or a combination of volatile and non-volatile memory. In examples, the system memory 2006 may be arranged to store code for execution by the processor 2004 and/or data related to the execution. For example, the system memory may store operating system code 2018, application code 2020, and program data 2022. In examples, the application code 2020 may comprise code to implement one or more of the example methods described herein, for examples to implement the steps described above with reference to Figures 2 and 4. The application code 2020 may be arranged to cooperate with the program data 2022 or other media, for example to allow one or more of the MNO system 102, DNS server 104, gateway and call-back server 106, enterprise service system 108 , and UE device 110 to carry out the functionality described herein.

In examples, the computing device 2000 may have additional features, functionality or interfaces. For example main unit 2002 may cooperate with one or more peripheral devices for example to implement the methods described herein. In examples, the computing device 2000 comprises, as peripheral devices, an output interface 2024, a peripheral interface 2026, a storage device 208, and a communication module 2030. In examples, the computing device comprises an interface bus 2032 arranged to facilitate communication between the main unit 2002 and the peripheral devices.

In examples, the output device 2024 may comprise output devices such as a graphical processing unit (GPU) 2034 and audio output unit 2036 for example arranged to be able to communicate with external devices such as a display, and/or loudspeaker, via one or more suitable ports such as audio/video (A/V) port. In examples, the peripheral interface 2026 may comprise a serial interface 2038, a parallel interface 2040, and a input/output port(s) 2042 which may be operable to cooperate with the main unit 2002 to allow communication with one or more external input and/or output devices via the I/O port 2042. For example, the I/O port 2042 may communication with one or more input devices such as a keyboard, mouse, touch pad, voice input device, scanner, imaging capturing device, video camera, and the like, and/or with one or more output devices such as a 2D printer (e.g. paper printer), or 3D printer, or other suitable output device. For example, thin section images may be received via the I/O port 2042 from a suitable imaging device.

In examples, the storage device may comprise removable storage media 2044 and/or non-removable storage media 2046. For example, the removable storage media may be random access memory (RAM), electrically erasable programmable read only memory (EEPROM), read only memory (ROM) flash memory, or other memory technology, optical storage media such as compact disc (CD) digital versatile disc (DVD) or other optical storage media, magnetic storage media such as floppy disc, magnetic tape, or other magnetic storage media. However, it will be appreciated that any suitable type of removable storage media could be used. Non-removable storage media 2046 may comprise a magnetic storage media such as a hard disk drive, or solid state hard drive, or other suitable media, although it will be appreciated that any suitable non-removable storage media could be used. The storage device 2028 may allow access by the main unit 2002 for example to implement the methods described herein.

In examples, the communication module may comprise a wireless communication module 2048 and a wired communication module 2050. For example, the wireless communication module may be arranged to communicate wirelessly via a suitable wireless communication standard for example relating to Wi-Fi, Bluetooth, near field communication, optical communication (such as infrared), acoustic communication, or via a suitable mobile telecommunications standard. The wired communication module may allow communication via a wired or optical link for example by Ethernet or optical cable. However, it will be appreciated that any suitable communication module could be used.

Referring to Figures 1 and 3, one or more of the MNO system 102, DNS server 104, gateway and call-back server 106, enterprise service system 108 , and UE device 110 may for example be implemented by the computing device 2000, for example acting as a server, or user equipment, or in cooperation with other computing devices interacting via a network.

It will be appreciated that in examples of the disclosure, elements of the disclosed methods may be implemented in a computing device (such as the computing device described above with reference to Figure 22) in any suitable manner. For example, a conventional computing device may be adapted to perform one or more of the methods described herein by programming/adapting one or more processors of the computing device. As such, in examples, the programming/adapting may be implemented in the form of a computer program product comprising computer implementable instructions stored on a data carrier and/or carried by a signal bearing medium, such as floppy disk, hard disk, optical disk, solid state drive, flash memory, programmable read only memory (PROM), random access memory (RAM), or any combination of these or other storage media or signal bearing medium, or transmitted via a network such as a wireless network, Ethernet, the internet, or any other combination of these or other networks. In other words, in examples, a computer program may comprise computer readable instructions which, when implemented on a computer, cause the computer to carry out a method according examples of the disclosure. In examples, a storage medium may comprise the computer program, for example, as mentioned above. It will also be appreciated that other suitable computer architectures could be used such as those based on one or more parallel processors. Furthermore, at least some processing may be implemented on one or more graphical processing units (GPUs).

Although a variety of examples have been described herein, these are provided by way of example only and many variations and modifications on such examples will be apparent to the skilled person and fall within the scope of the present invention, which is defined by the appended claims and their equivalents.

## Claims

1. A gateway server (106) that is operably connected to a network operator (102) via a public IP network (114) and a secure IP network (120), the gateway server (106) comprising:
a first communication module (112) operable to provide communication between the gateway server (106) and the network operator (102) using the public IP network (114), the first communication module (112) having a first IP address; and
a second communication module (118) operable to provide communication between the gateway server (106) and the network operator (102) using the secure IP network (120), the second communication module (118) having a second IP address which is the same IP address as the first IP address;
in which the gateway server (106) is operable to:
receive one or more IP packets from the network operator (102) via at least one of the public IP network (114) using the first communication module (112) and the secure IP network (120) using the second communication module (118), each of the one or more IP packets comprising associated header data;
interpret the header data of each of the IP packets; and
direct responses to the received one or more IP packets via the public IP network (114) or via the secure IP network (118) based on the interpreted header data so that the responses are routed via the IP network from which the corresponding respective IP packets were received.

2. The gateway server (106) according to claim 1, in which the gateway server (106) is operable to normalise the header data, and store the normalised header data together with session ID data associated with an IP packet of the one or more IP packets.

3. The gateway server (106) according to claim 2, in which the gateway server (106) is operable to add ingress data to the header data, the ingress data indicating whether the respective IP packet arrived at the first communication module (112) from the public IP network (114) or at the second communication module (118) from the secure IP network (120).

4. The gateway server (106) according to claim 3, in which the gateway server (106) is operable to direct the responses based on the ingress data.

5. The gateway server (106) according to any of claims 2 to 4, in which the gateway server (106) is operable to delete the header data and the session ID data on receipt of a call-back response from an enterprise service system (108).

6. The gateway server (106) according to any of claims 2 to 4, in which the gateway server (106) is operable to start a timer upon receipt of a call-back response from an enterprise service system (108), and delete the header data and the session ID data when timer data of the timer indicates that greater than a deletion threshold amount of time has passed.

7. The gateway server (106) according to any preceding claim, in which the one or more IP packets communicated via the secure IP network (120) comprise enriched header data.

8. The gateway server (106) according to claim 7, in which the gateway server (106) is operable to perform an authentication operation based on a comparison between the enriched header data and checking parameters received from the enterprise service system (108) via a secure request.

9. The gateway server (106) according to claim 8, in which the enriched header data is cross-referenced with one or more data items obtained from sources other than the enriched header data and the checking parameters so as to generate cross-referenced data, and preferably in which the authentication is based on comparison between the cross-referenced data and the checking parameters.

10. The gateway server (106) according to claim 8 or claim 9, in which the authentication operation comprises comparison of a fingerprint ID hash value generated from two or more of the checking parameters received from the enterprise service system (108) with an authentication hash value generated by the gateway server (106) from the enriched header data.

11. The gateway server (106) according to any of claims 8 to 10, in which the checking parameters are selected according to an agreement between an operator of the gateway server (106) and an operator of the enterprise service system (108).

12. The gateway server (106) according to any of claims 8 to 11, in which execution of the authentication operation is triggered in response to reception of an authentication request from an external source.

13. The gateway server (106) according to any preceding claim, in which the secure IP network (120) is an IP exchange (IPX) network.

14. The gateway server (106) according to any preceding claim, in which the secure IP network (120) utilises a virtual private network (VPN).

15. A method implemented by a gateway server (106) that is operably connected to a network operator (102) via a public IP network (114) and a secure IP network (120), in which the gateway server (106) comprises a first communication module (112) operable to provide communication between the gateway server (106) and the network operator (102) using the public IP network (114), the first communication module (112) having a first IP address, and a second communication module (118) operable to provide communication between the gateway server (106) and the network operator (102) using the secure IP network (120), the second communication module (118) having a second IP address which is the same IP address as the first IP address;
in which the method comprises:
receiving (s402) one or more IP packets from the network operator (102) via at least one of the public IP network (114) using the first communication module (112) and the secure IP network (120) using the second communication module (118), each of the one or more IP packets comprising associated header data;
interpreting (s404) the header data of each of the IP packets; and
directing (s406) responses to the received one or more IP packets via the public IP network (114) or via the secure IP network (120) based on the interpreted header data so that the responses are routed via the IP network from which the corresponding respective IP packets were received.

## Patentansprüche

1. Gateway-Server (106), der betriebsfähig über ein öffentliches IP-Netzwerk (114) und ein sicheres IP-Netzwerk (120) mit einem Netzwerkbetreiber (102) verbunden ist, der Gateway-Server (106) umfassend:
ein erstes Kommunikationsmodul (112), das dazu betriebsfähig ist, unter Verwendung der öffentlichen IP-Netzwerks (114) eine Kommunikation zwischen dem Gateway-Server (106) und dem Netzwerkbetreiber (102) bereitzustellen, wobei das erste Kommunikationsmodul (112) eine erste IP-Adresse aufweist; und
ein zweites Kommunikationsmodul (118), das dazu betriebsfähig ist, unter Verwendung des sicheren IP-Netzwerks (120) eine Kommunikation zwischen dem Gateway-Server (106) und dem Netzwerkbetreiber (102) bereitzustellen, wobei das zweite Kommunikationsmodul (118) eine zweite IP-Adresse aufweist, die dieselbe IP-Adresse ist wie die erste IP-Adresse;
wobei der Gateway-Server (106) dazu betriebsfähig ist:
ein oder mehrere IP-Pakete von dem Netzwerkbetreiber (102) über mindestens eines von dem öffentlichen IP-Netzwerk (114) unter Verwendung des ersten Kommunikationsmoduls (112) und dem sicheren IP-Netzwerk (120) unter Verwendung des zweiten Kommunikationsmoduls (118) zu empfangen, wobei jedes von dem einen oder den mehreren IP-Paketen zugehörige Header-Daten umfasst;
die Header-Daten von jedem der IP-Pakete zu interpretieren; und
über das öffentliche IP-Netzwerk (114) oder über das sichere IP-Netzwerk (118) basierend auf den interpretierten Header-Daten Antworten an die empfangenen einen oder mehreren IP-Pakete zu leiten, sodass die Antworten über das IP-Netzwerk, von dem die entsprechenden jeweiligen IP-Pakete empfangen wurden, geroutet werden.

2. Gateway-Server (106) gemäß Anspruch 1, wobei der Gateway-Server (106) dazu betriebsfähig ist, die Header-Daten zu normalisieren und die normalisierten Header-Daten zusammen mit Sitzungs-ID-Daten, die einem IP-Paket des einen oder der mehreren IP-Pakete zugehörig sind, zu speichern.

3. Gateway-Server (106) gemäß Anspruch 2, wobei der Gateway-Server (106) dazu betriebsfähig ist, Eingangsdaten zu den Header-Daten hinzuzufügen, wobei die Eingangsdaten angeben, ob das jeweilige IP-Paket an dem ersten Kommunikationsmodul (112) von dem öffentlichen IP-Netzwerk (114) oder an dem zweiten Kommunikationsmodul (118) von dem sicheren IP-Netzwerk (120) angekommen ist.

4. Gateway-Server (106) gemäß Anspruch 3, wobei der Gateway-Server (106) dazu betriebsfähig ist, die Antworten basierend auf den Eingangsdaten zu leiten.

5. Gateway-Server (106) gemäß einem der Ansprüche 2 bis 4, wobei der Gateway-Server (106) dazu betriebsfähig ist, bei Empfang einer Rückrufantwort von einem Unternehmensdienstsystem (108) die Header-Daten und die Sitzungs-ID-Daten zu löschen.

6. Gateway-Server (106) gemäß einem der Ansprüche 2 bis 4, wobei der Gateway-Server (106) dazu betriebsfähig ist, bei Empfang einer Rückrufantwort von einem Unternehmensdienstsystem (108) einen Timer zu starten und die Header-Daten und die Sitzungs-ID-Daten zu löschen, wenn Timer-Daten des Timers angeben, dass eine Zeit, die länger als ein Löschschwellenwert ist, verstrichen ist.

7. Gateway-Server (106) gemäß einem der vorhergehenden Ansprüche, wobei das eine oder die mehreren IP-Pakete, die über das sichere IP-Netzwerk (120) kommunizieren, angereicherte Header-Daten umfassen.

8. Gateway-Server (106) gemäß Anspruch 7, wobei der Gateway-Server (106) dazu betriebsfähig ist, basierend auf einem Vergleich zwischen den angereicherten Header-Daten und den Überprüfungsparametern, die von dem Unternehmensdienstsystem (108) über eine sichere Anfrage empfangen wurden, einen Authentifizierungsvorgang durchzuführen.

9. Gateway-Server (106) gemäß Anspruch 8, wobei die angereicherten Header-Daten mit einem oder mehreren Datenelementen, die aus anderen Quellen als den angereicherten Header-Daten empfangen werden, und den Überprüfungsparametern abgeglichen werden, um so abgeglichene Daten zu erzeugen und wobei bevorzugt die Authentifizierung auf einem Vergleich zwischen den abgeglichenen Daten und den Überprüfungsparametern basiert.

10. Gateway-Server (106) gemäß Anspruch 8 oder Anspruch 9, wobei der Authentifizierungsvorgang einen Vergleich eines Fingerabdruck-ID-Hashwertes, der aus zwei oder mehreren der Überprüfungsparameter, die von dem Unternehmensdienstsystem (108) empfangen werden, erzeugt wird, mit einem Authentifizierungs-Hashwert, der von dem Gateway-Server (106) aus den angereicherten Header-Daten erzeugt wird, umfasst.

11. Gateway-Server (106) gemäß einem der Ansprüche 8 bis 10, wobei die Überprüfungsparameter ausgewählt sind gemäß einer Vereinbarung zwischen einem Betreiber des Gateway-Servers (106) und einem Betreiber des Unternehmensdienstsystems (108).

12. Gateway-Server (106) gemäß einem der Ansprüche 8 bis 11, wobei die Ausführung des Authentifizierungsvorgangs als Antwort auf einen Empfang einer Authentifizierungsanfrage von einer externen Quelle ausgelöst wird.

13. Gateway-Server (106) gemäß einem der vorhergehenden Ansprüche, wobei das sichere IP-Netzwerk (120) ein IP-Austausch- (IPX-)Netzwerk ist.

14. Gateway-Server (106) gemäß einem der vorhergehenden Ansprüche, wobei das sichere IP-Netzwerk (120) ein virtuelles privates Netzwerk (VPN) nutzt.

15. Verfahren, das von einem Gateway-Server (106) implementiert wird, der betriebsfähig über ein öffentliches IP-Netzwerk (114) und ein sicheres IP-Netzwerk (120) mit einem Netzwerkbetreiber (102) verbunden ist, wobei der Gateway-Server (106) Folgendes umfasst: ein erstes Kommunikationsmodul (112), das dazu betriebsfähig ist, unter Verwendung des öffentlichen IP-Netzwerks (114) eine Kommunikation zwischen dem Gateway-Server (106) und dem Netzwerkbetreiber (102) bereitzustellen, wobei das erste Kommunikationsmodul (112) eine erste IP-Adresse aufweist, und ein zweites Kommunikationsmodul (118), das dazu betriebsfähig ist, unter Verwendung des sicheren IP-Netzwerks (120) eine Kommunikation zwischen dem Gateway-Server (106) und dem Netzwerkbetreiber (102) bereitzustellen, wobei das zweite Kommunikationsmodul (118) eine zweite IP-Adresse aufweist, die dieselbe IP-Adresse wie die erste IP-Adresse ist,
wobei das Verfahren Folgendes umfasst:
Empfangen (s402) eines oder mehrerer IP-Pakete von dem Netzwerkbetreiber (102) über mindestens eines von dem öffentlichen IP-Netzwerk (114) unter Verwendung des ersten Kommunikationsmoduls (112) und dem sicheren IP-Netzwerk (120) unter Verwendung des zweiten Kommunikationsmoduls (118), wobei jedes des einen oder der mehreren IP-Pakete zugehörige Header-Daten umfasst;
Interpretieren (s404) der Header-Daten jedes der IP-Pakete; und
Leiten (s406), über das öffentliche IP-Netzwerk (114) oder über das sichere IP-Netzwerk (120), von Antworten an die empfangenen einen oder mehreren IP-Pakete basierend auf den interpretierten Header-Daten, sodass die Antworten über das IP-Netzwerk, von dem die entsprechenden jeweiligen IP-Pakete empfangen wurden, geroutet werden.

## Revendications

1. Serveur passerelle (106) relié de manière fonctionnelle à un opérateur de réseau (102) par l'intermédiaire d'un réseau IP public (114) et d'un réseau IP sécurisé (120), le serveur passerelle (106) comprenant :
un premier module de communication (112) apte à assurer une communication entre le serveur passerelle (106) et l'opérateur de réseau (102) au moyen du réseau **IP** public (114), le premier module de communication (112) ayant une première adresse **IP** ; et
un deuxième module de communication (118) apte à assurer la communication entre le serveur passerelle (106) et l'opérateur de réseau (102) au moyen du réseau **IP** sécurisé (120), le deuxième module de communication (118) ayant une deuxième adresse IP qui est la même adresse IP que la première adresse IP ;
dans lequel le serveur passerelle (106) est apte à :
recevoir un ou plusieurs paquets IP provenant de l'opérateur de réseau (102) par l'intermédiaire d'au moins l'un parmi le réseau IP public (114) au moyen du premier module de communication (112) et du réseau IP sécurisé (120) au moyen du deuxième module de communication (118), chacun desdits un ou plusieurs paquets IP comprenant des données d'en-tête associées ;
interpréter les données d'en-tête de chacun des paquets IP ; et
diriger des réponses auxdits un ou plusieurs paquets IP reçus par l'intermédiaire du réseau IP public (114) ou par l'intermédiaire du réseau IP sécurisé (118), en fonction des données d'en-tête interprétées, de telle sorte que les réponses soient acheminées par l'intermédiaire du réseau IP depuis lequel les paquets IP correspondants respectifs ont été reçus.

2. Serveur passerelle (106) selon la revendication 1, dans lequel le serveur passerelle (106) est apte à normaliser les données d'en-tête, et à stocker les données d'en-tête normalisées conjointement avec des données d'identifiant de session associées à un paquet IP parmi lesdits un ou plusieurs paquets IP.

3. Serveur passerelle (106) selon la revendication 2, dans lequel le serveur passerelle (106) est apte à ajouter des données d'entrée aux données d'en-tête, les données d'entrée indiquant si le paquet IP respectif est arrivé au premier module de communication (112) depuis le réseau IP public (114) ou au deuxième module de communication (118) depuis le réseau IP sécurisé (120).

4. Serveur passerelle (106) selon la revendication 3, dans lequel le serveur passerelle (106) est apte à diriger les réponses en fonction des données d'entrée.

5. Serveur passerelle (106) selon l'une quelconque des revendications 2 à 4, dans lequel le serveur passerelle (106) est apte à supprimer les données d'en-tête et les données d'identifiant de session à la réception d'une réponse de rappel provenant d'un système de service d'entreprise (108).

6. Serveur passerelle (106) selon l'une quelconque des revendications 2 à 4, dans lequel le serveur passerelle (106) est apte à démarrer un minuteur à la réception d'une réponse de rappel provenant d'un système de service d'entreprise (108), et à supprimer les données d'en-tête et les données d'identifiant de session lorsque les données de temporisation du minuteur indiquent qu'un temps supérieur à une valeur de seuil de suppression s'est écoulé.

7. Serveur passerelle (106) selon l'une quelconque des revendications précédentes, dans lequel lesdits un ou plusieurs paquets IP communiqués par l'intermédiaire du réseau IP sécurisé (120) comprennent des données d'en-tête enrichies.

8. Serveur passerelle (106) selon la revendication 7, dans lequel le serveur passerelle (106) est apte à mettre en œuvre une opération d'authentification en fonction d'une comparaison entre les données d'en-tête enrichies et des paramètres de vérification reçus du système de service d'entreprise (108) par l'intermédiaire d'une requête sécurisée.

9. Serveur passerelle (106) selon la revendication 8, dans lequel les données d'entête enrichies sont recoupées avec un ou plusieurs éléments de données obtenus à partir de sources autres que les données d'en-tête enrichies et les paramètres de vérification, de manière à générer des données recoupées, et de préférence dans lequel l'authentification est basée sur une comparaison entre les données recoupées et les paramètres de vérification.

10. Serveur passerelle (106) selon la revendication 8 ou la revendication 9, dans lequel l'opération d'authentification comprend une comparaison d'une valeur de hachage d'identifiant d'empreinte générée à partir d'au moins deux paramètres de vérification reçus du système de service d'entreprise (108), avec une valeur de hachage d'authentification générée par le serveur passerelle (106) à partir des données d'en-tête enrichies.

11. Serveur passerelle (106) selon l'une quelconque des revendications 8 à 10, dans lequel les paramètres de vérification sont sélectionnés selon un accord entre un opérateur du serveur passerelle (106) et un opérateur du système de service d'entreprise (108).

12. Serveur passerelle (106) selon l'une quelconque des revendications 8 à 11, dans lequel l'exécution de l'opération d'authentification est déclenchée en réponse à la réception d'une requête d'authentification provenant d'une source externe.

13. Serveur passerelle (106) selon l'une quelconque des revendications précédentes, dans lequel le réseau IP sécurisé (120) est un réseau IP exchange (IPX).

14. Serveur passerelle (106) selon l'une quelconque des revendications précédentes, dans lequel le réseau IP sécurisé (120) utilise un réseau privé virtuel (VPN).

15. Procédé mis en œuvre par un serveur passerelle (106) qui est relié de manière fonctionnelle à un opérateur de réseau (102) par l'intermédiaire d'un réseau IP public (114) et d'un réseau IP sécurisé (120), dans lequel le serveur passerelle (106) comprend un premier module de communication (112) apte à assurer la communication entre le serveur passerelle (106) et l'opérateur de réseau (102) au moyen du réseau IP public (114), le premier module de communication (112) ayant une première adresse IP, et un deuxième module de communication (118) apte à assurer la communication entre le serveur passerelle (106) et l'opérateur de réseau (102) au moyen du réseau IP sécurisé (120), le deuxième module de communication (118) ayant une deuxième adresse IP qui est la même adresse IP que la première adresse IP ;
dans lequel le procédé comprend :
la réception (s402) d'un ou plusieurs paquets IP en provenance de l'opérateur de réseau (102) par l'intermédiaire d'au moins l'un parmi le réseau IP public (114) au moyen du premier module de communication (112) et du réseau IP sécurisé (120) au moyen du deuxième module de communication (118), chacun desdits un ou plusieurs paquets IP comprenant des données d'en-tête associées ;
l'interprétation (s404) des données d'en-tête de chacun des paquets IP ; et
l'orientation (s406) des réponses auxdits un ou plusieurs paquets IP reçus par l'intermédiaire du réseau IP public (114) ou par l'intermédiaire du réseau IP sécurisé (120), en fonction des données d'en-tête interprétées, de telle sorte que les réponses soient acheminées par l'intermédiaire du réseau IP depuis lequel les paquets IP correspondants respectifs ont été reçus.
